(19)

Europäisches
Patentamt
European
Patent Office
Office européen
des brevets

(11) **EP 1 462 638 B1**

(12) **EUROPEAN PATENT SPECIFICATION**

(45) Date of publication and mention
of the grant of the patent:
**07.05.2008 Bulletin 2008/19**

(51) Int Cl.:
*F02D 41/34* (2006.01)   *G01P 3/489* (2006.01)
*G01P 15/16* (2006.01)   *G01M 15/00* (2006.01)
*G06F 17/17* (2006.01)

(21) Application number: **03075871.8**

(22) Date of filing: **27.03.2003**

(54) **Method and apparatus for determining the variation of an engine parameter**

Verfahren und Einrichtung zur Bestimmung des Verlaufs eines Motorparameters

Procédé et dispositif pour déterminer l'évolution d'un paramètre moteur

(84) Designated Contracting States:
**DE GB SE**

(43) Date of publication of application:
**29.09.2004 Bulletin 2004/40**

(73) Proprietor: **Ford Global Technologies, LLC**
**Dearborn, MI 48126 (US)**

(72) Inventors:
• **Stotsky, Alexander**
**SE-422 52 Hisings Backa (SE)**
• **Forgo, Attila**
**SE-425 30 Hisings Kärra (SE)**

(74) Representative: **Ekström, Nils**
**Albihns Göteborg AB**
**P.O. Box 142**
**401 22 Göteborg (SE)**

(56) References cited:
**EP-A- 0 323 696      GB-A- 2 357 595**
**US-A- 4 274 142      US-A- 5 109 695**

• FUCHS E ET AL: "Fast least-squares polynomial approximation in moving time windows" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 1965-1968, XP010226530 ISBN: 0-8186-7919-0
• DIOP S ET AL: "Interpolation And Numerical Differentiation For Observer Design" PROC AMERICAN CONTROL CONFERENCE, BALTIMORE, MARYLAND, vol. 2, 29 June 1994 (1994-06-29), pages 1329-1333, XP010304362
• KESSEL J-A ET AL: "MODELLBASIERTE MOTORSTEUERUNG, - REGELUNG UND- UEBERWACHUNG" MTZ MOTORTECHNISCHE ZEITSCHRIFT, FRANCKH'SCHE VERLAGSHANDLUNG,ABTEILUNG TECHNIK. STUTTGART, DE, vol. 59, no. 4, 1 April 1998 (1998-04-01), pages 240-242,244-24, XP000741724 ISSN: 0024-8525

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

The invention relates to a method for determining the variation of an engine parameter by interpolating a polynomial according to the preamble of claim 1. In particular the invention relates to a method of estimating engine crankshaft speed and acceleration from the crankshaft angle position measurements.

BACKGROUND ART

Several related prior art methods are known for estimating the cylinder torque based on angular velocity and acceleration estimation and mathematical model of the system. US 4 532 592, discloses a method where the crankshaft angular velocity is used to calculate the indicated torque. In US 5 771 482 and 6 223 120 further developments has been carried out in the direction of incorporating a system model which takes into account the flexibility of crankshaft,. Very wide class of applications where the crankshaft high resolution speed and acceleration are used is the combustion state monitoring functions for the misfire diagnostics, for example US 5804711 and GB 2260194.

All the document mentioned above use the estimated crankshaft angular acceleration, which is computed from the crankshaft angular velocity, which is in turn, computed from the time interval

between the encoder teeth. Furthermore all of the related prior art methods have the following elements in common: angular velocity is computed using backward difference method from the measured time interval during which the crankshaft rotates at certain degrees. Angular velocity obtained by this method is filtered by the lowpass filter in order to filter out high frequency component, and then backward difference method is applied again to estimate the angular acceleration.

The behavior of the derivative computed via the first difference method is very often accompanied with the peaking phenomena which in turn leads to errors in acceleration and hence in engine torque estimation.

In the present invention we propose to use the spline interpolation method to estimate engine angular acceleration. A spline interpolation method is described in Diop S., Grizzle J., Moraal P., Stefanopoulou A., " Interpolation and Numerical Differentiation for Observer Design ", Proc. American Control Conference, Baltimore, Maryland, June, 1994, p.p. 1329 -1333. The method is based on on-line least-squares polynomial fitting over the moving in time window of a certain size.

Another example is given in Fuch et al "Fast Least-Squares Polynomial approximation in moving time windows", Proc. IEEE Int. Conf. on Acoustics, Speech and Signal Processing, Munich, Germany, 1999, p.p. 1965-1968.

The advantage of this method over the backward difference method is its good transient behavior. The idea for the spline interpolation method is to fit a polynomial of a certain order as a function of time in least squares sense and take the derivatives analytically as described in either of Dabroom A., Khalil H., " Discrete-Time Implementation of High-Gain Observers for Numerical Differentiation ", International Journal of Control, N17, vol.72, p.p. 1523-1527, 1999. And Diop S., Grizzle J., Moraal P., Stefanopoulou A., " Interpolation and Numerical Differentiation for Observer Design ", Proc. American Control Conference, Baltimore, Maryland, June, 1994, p.p. 1329 - 1333.

Several problems, however, remain open for spline interpolation method. Relatively large window size w requires more on-line computations and makes practical implementation of the method difficult. Moreover in the Dabroom and Diop references only constant intersampling time is considered, which in many practical applications is not constant.

For example, the crankshaft angle measurements in automotive engines are based on the measurements of the crankwheel tooth number and therefore the time which corresponds to the rotation of one tooth varies. This necessitates the development of recursive computationally efficient algorithms for variable discretization step.

DISCLOSURE OF INVENTION

The present invention relates to the recursive computationally efficient algorithms for variable discretization step. An object of the present invention is to provide a computationally efficient recursive spline interpolation algorithms for variable discretization step for determining an engine parameter, such as in particular engine crankshaft speed and angular acceleration directly from the measured time interval between encoder teeth. This object is achieved by a method according to characterising portion of claim 1. The algorithm according to the invention do not require high processor capacity and is suitable for real-time implementation.

The result can be used for the improvement of the estimation accuracy of the crankshaft speed and acceleration which is used in many engine combustion state and torque monitoring functions.

A theroretical background for the method for determining the variation of an engine parameter according to the invention is given below. The method is performed by interpolating a polynomial to a moving window of size w, where w is the number of measurement data being obtained in the window, said measurement data being obtained at a variable discretisation step, wherein the method includes the following method steps:

- (a) assigning a polynomial of order n representing the variation of said engine parameter, said polynomial being characterised by a set of model coefficients associated with said window, which model coefficients are represented by a set of sums over measurement data and powers of said discretisation step in said window,
- (b) determining said model coefficients by calculating said sums,
- moving (c) the window by entering a new measurement data and rejecting a first measurement data in said window, and
- repeating method steps (a) - (c).

Theoretical background

The first step is to choose the interpolating polynomial as

$$\hat{\alpha} = c_0 + c_1 t + \ldots + c_n t^n \quad (E1)$$

where $\hat{\alpha}$ is an estimate of the measured signal $\alpha$, t is continuous time, $c_i$, i = 0,...,n are coefficients to be found. The estimates of the derivatives are obtained by differentiating (E1) analytically.

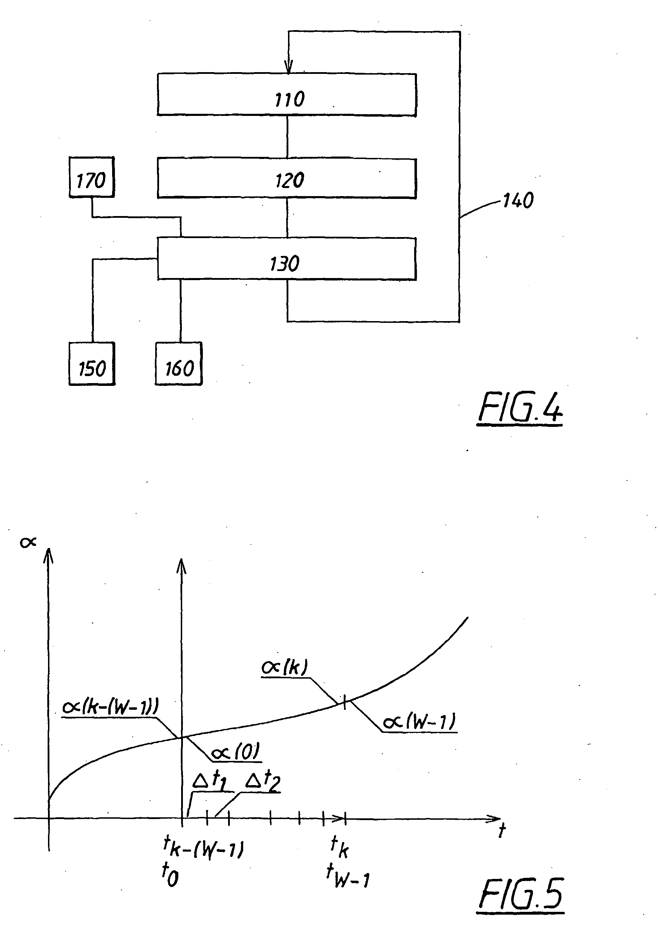

Suppose that there is a measured window of data $\{\alpha_{k-(w-1)}, \ldots, \alpha_k\}$ of a size w, measured discretely with variable discretization step. It is convenient to place the origin at the point k-(w-1), where k is the step number, then there is a window of data $\{\alpha_0, \ldots, \alpha_{w-1}\}$ measured at $\{0, \ldots, t_{w-1}\}$ respectively (see Fig.4). Variable discretization step is presented as $\Delta t_i = t_i - t_{i-1}$, i = 1 ,...,w-1.

The sum to be minimized at every step is:

$$S = \sum_{i=0}^{w-1} (\alpha_i - (c_0 + c_1 t_i + \ldots + c_n t_i^n))^2 \qquad (E2)$$

where $t_i$, i = 0,...,w-1 is a discrete time which corresponds to the signal measurements $\alpha_i$, $t_0 = 0$.

Minimum of S is achieved when equating to zero partial derivatives of S with respect to $c_i$, i = 0,...,n , i.e.,

$$\frac{\partial S}{\partial c_i} = 0 \qquad (E3)$$

Equations (E3) can be written as follows:

$$c_0 w + c_1 \sum_{i=0}^{w-1} t_i + \ldots + c_n \sum_{i=0}^{w-1} t_i^n = \sum_{i=0}^{w-1} \alpha_i \qquad (E4)$$

$$c_0 \sum_{i=0}^{w-1} t_i + c_1 \sum_{i=0}^{w-1} t_i^2 + \ldots + c_n \sum_{i=0}^{w-1} t_i^{n+1} = \sum_{i=0}^{w-1} \alpha_i t_i \qquad (E5)$$

$$c_0 \sum_{i=0}^{w-1} t_i^n + c_1 \sum_{i=0}^{w-1} t_i^{n+1} + ... + c_n \sum_{i=0}^{w-1} t_i^{2n} = \sum_{i=0}^{w-1} \alpha_i t_i^n \qquad \text{(E6)}$$

where equation (E4) represents $\dfrac{\partial S}{\partial c_1} = 0$, equation (E5) represents $\dfrac{\partial S}{\partial c_2} = 0$ and finally equation (E6) represents

$\dfrac{\partial S}{\partial c_3} = 0$.

The system (E4) - (E6) should be resolved at every step in order to find the coefficients $c_i$, i = 0,...,n. It is clear that for a sufficiently large window size w, the calculation of sums in the system (E4) - (E6) requires a lot of computational power and our next step is to present recursive computationally efficient algorithms according to the invention to compute these sums.

Let us consider one step of the moving window w. Suppose that at step k-1 there is the following data $\{\alpha_0, ... , \alpha_{w-1}\}$ measured at $\{0, ..., t_{w-1}\}$, and respectively and at step k there is $\{\alpha_1, ... , \alpha_w\}$ measured at $\{t_1, ..., t_w\}$. It means that new value $\alpha_w$ measured at the time $t_w$ comes into the window ( buffer) and the value $\alpha_0$ gets out. Our problem statement is to find computationally efficient recursive algorithms to compute the sums $S_{m_k} = \sum_{l=1}^{w} t_l^m$ via the sums on the previous step $S_{m_{k-1}} = \sum_{i=0}^{w-1} t_i^m$

Define the sum of order m at step k as follows

$$S_{m_k} = \sum_{l=1}^{w} t_l^m = \Delta t_2^m + (\Delta t_2 + \Delta t_3)^m + ... + (\Delta t_2 + \Delta t_3 + ... \Delta t_w)^m$$

$$\text{(E7)}$$

The sum (E7) should be computed using the same sum on a previous step k-1 which can written as:

$$S_{m_{k-1}} = \sum_{l=0}^{w-1} t_l^m = \Delta t_1^m + (\Delta t_1 + \Delta t_2)^m + ... + (\Delta t_1 + \Delta t_2 + ... \Delta t_{w-1})^m$$

$$\text{(E8)}$$

and the sums of lower order at step k which are defined as:

$$S_{(m-j)_k} = \sum_{l=1}^{w} t_l^{m-j} = \Delta t_2^{m-j} + (\Delta t_2 + \Delta t_3)^{m-j} + ... + (\Delta t_2 + \Delta t_3 + ... \Delta t_w)^{m-j}$$

$$\text{(E9)}$$

where $1 \leq j \leq m-1$

Starting with (E8) and using the following identity:

$$(x+y)^m = \sum_{j=0}^{m} C_j^m x^j y^{m-j}, \qquad C_j^m = \frac{m!}{j!(m-j)!}$$

$$\text{(E10)}$$

where m = 0,1,2,..., one gets

$$S_{m_{k-1}} = (w-1)\Delta t_1^m + \Delta t_2^m + (\Delta t_2 + \Delta t_3)^m + \ldots + (\Delta t_2 + \Delta t_3 + \ldots \Delta t_{w-1})^m +$$
$$\sum_{j=1}^{m-1} C_j^m (\Delta t_1^j \Delta t_2^{m-j} + \ldots + \Delta t_1^j (\Delta t_2 + \ldots \Delta t_{w-1})^{m-j})$$

$$\text{(E11)}$$

Notice that

$$\Delta t_2^m + (\Delta t_2 + \Delta t_3)^m + \ldots + (\Delta t_2 + \Delta t_3 + \ldots \Delta t_{w-1})^m = S_{mk} - (\Delta t_2 + \Delta t_3 + \ldots \Delta t_w)^m$$
$$\text{(E12)}$$

and

$$\sum_{j=1}^{m-1} C_j^m (\Delta t_1^j \Delta t_2^{m-j} + \ldots + \Delta t_1^j (\Delta t_2 + \ldots \Delta t_{w-1})^{m-j}) = \sum_{j=1}^{m-1} C_j^m \Delta t^j (S_{(m-j)k} - (\Delta t_2 + \ldots + \Delta t_w)^{m-j})$$
$$\text{(E13}$$

Substituting (E12) and (E13) in (E11) one gets

$$S_{m_k} = S_{m_{k-1}} \sum_{i=1}^{w} t_i^m - (w-1)\Delta t_1^m - \sum_{j=1}^{m-1} C_j^m \Delta t^j (S_{(m-j)k} - (\Delta t_2 + \ldots + \Delta t_w)^{m-j}) + (\Delta t_2 + \Delta t_3 + \ldots \Delta t_{w-1})^m$$

$$\text{where} \quad C_j^m = \frac{m!}{j!(m-j)!}, 1 \le j \le (m-1), m > 1$$

$$\text{(E14)}$$

Our next step is to calculate the sums on the right hand side of the equation (E4) - (E6). The sums $S_{\alpha m_k} = \sum_{i=1}^{w} \alpha_i t_i^m$ should be calculated via the sums on the previous step $S_{\alpha m k-1} = \sum_{i=0}^{w-1} \alpha_i t_i^m$, where m = 2, ... n .

Using similar arguments one can show that

$$S_{\alpha m_k} = S_{\alpha m_{k-1}} - (\alpha_1 + \alpha_2 + \ldots + \alpha_{w-1}) -$$

$$\sum_{j=1}^{n-1} C_j^m \Delta t_1^j (S_{\alpha(m-j)k} - \alpha_w (\Delta t_2 + \Delta t_3 + \ldots + \Delta t_w)^{m-j}) + \alpha_w (\Delta t_2 + \Delta t_3 + \ldots \Delta t_w)^m$$

$$(E15)$$

where

$$S_{\alpha m_{k-1}} = \sum_{i=0}^{w-1} \alpha_i t_i^m = \alpha_1 \Delta t_1^m + \alpha_2 (\Delta t_1 + \Delta t_2)^m + \ldots + \alpha_{w-1} (\Delta t_1 + \Delta t_2 + \ldots \Delta t_{w-1})^m$$

$$(E16)$$

is the sum on the step (k-1) , and

$$S_{\alpha(m-j)_k} = \sum_{i=1}^{w} \alpha_i t_i^{m-j} = \alpha_2 \Delta t_2^{m-j} + \alpha_3 (\Delta t_2 + \Delta t_3)^{m-j} + \ldots + \alpha_w (\Delta t_2 + \Delta t_3 + \ldots \Delta t_w)^{m-j}$$

$$(E17)$$

where $1 \leq j \leq (m - 1)$

The order of the interpolating polynomial should be so selected to be as low as possible in order to reduce the computational burden and to filter out measurement noise.

In the next section a detailed solution of the interpolation problem for a second order polynomial is presented. This example is used in an enabling example for the crankshaft acceleration estimation.

Second Order Example

For the second order polynomial (E1), where n = 2, equations (E4) - (E6) can be written as follows

$$c_0 w + c_1 \sum_{i=0}^{w-1} t_i + c_2 \sum_{i=0}^{w-1} t_i^2 = \sum_{i=0}^{w-1} \alpha_i \qquad (E18)$$

$$c_0 \sum_{i=0}^{w-1} t_i + c_1 \sum_{i=0}^{w-1} t_i^2 + c_2 \sum_{i=0}^{w-1} t_i^3 = \sum_{i=0}^{w-1} \alpha_i t_i \qquad (E19)$$

$$c_0 \sum_{i=0}^{w-1} t_i^2 + c_1 \sum_{i=0}^{w-1} t_i^3 + c_2 \sum_{i=0}^{w-1} t_i^4 = \sum_{i=0}^{w-1} \alpha_i t_i^2 \qquad (E20)$$

Our next step is to present recursive computations for all the sums in (E18) - (E20). Suppose that at the first step all the sums are computed. Then

$$S_{1_k} = \sum_{i=1}^{w} t_i = S_{1_{k-1}} - (w-1)\Delta t_1 + (\Delta t_2 + \Delta t_3 + \ldots + \Delta t_w) \qquad (E21)$$

Using (E14) one gets

$$S_{1_k} = \sum_{i=1}^{w} t_i = S_{1_{k-1}} - (w-1)\Delta t_1 + (\Delta t_2 + \Delta t_3 + \ldots + \Delta t_w)$$

$$S_{1_k} = \sum_{i=1}^{w} t_i = S_{1_{k-1}} - (w-1)\Delta t_1 + (\Delta t_2 + \Delta t_3 + \ldots + \Delta t_w)$$

$$S_{2_k} = \sum_{i=1}^{w} t_i^2 = S_{2_{k-1}} - (w-1)\Delta t_1^2 - 2\Delta t_1 (S_{1_k} - (\Delta t_2 + \ldots + \Delta t_w)) + (\Delta t_2 + \Delta t_3 + \ldots + \Delta t_w)^2$$

$$S_{4_k} = \sum_{i=1}^{w} t_i^4 = S_{4_{k-1}} - (w-1)\Delta t_1^4 - 4\Delta t_1 (S_{3_k} - (\Delta t_2 + \ldots + \Delta t_w)^3) - 6\Delta t_1^2 (S_{2_k} - (\Delta t_2 + \ldots + \Delta t_w)^2) -$$
$$4\Delta t_1^3 (S_{1_k} - (\Delta t_2 + \ldots + \Delta t_w)) + (\Delta t_2 + \Delta t_3 + \ldots + \Delta t_w)^4$$
$$(E22)$$

and

$$S_{\alpha_k} = \sum_{i=1}^{w} \alpha_i = S_{\alpha_{k-1}} + \alpha_w - \alpha_0$$
$$(E23)$$

$$S_{\alpha_{1k}} = \sum_{i=1}^{w} \alpha_i t_i = S_{\alpha_{1(k-1)}} - (\alpha_1 + \alpha_2 + \ldots + \alpha_{w-1})\Delta t_1 + \alpha_w (\Delta t_2 + \Delta t_3 + \ldots + \Delta t_w)$$
$$(E24)$$

$$S_{\alpha_{2k}} = \sum_{i=1}^{w} \alpha_i t_i^2 = S_{\alpha_{2(k-1)}} - (\alpha_1 + \alpha_2 + \ldots + \alpha_{w-1})\Delta t_1^2 -$$
$$\alpha_w (\Delta t_2 + \Delta t_3 + \ldots + \Delta t_w)^2 - 2\Delta t_1 (S_{\alpha_{1k}} - \alpha_w ((\Delta t_2 + \Delta t_3 + \ldots + \Delta t_w)))$$
$$(E25)$$

Presenting equations (E18) - (E20) in matrix form yields

$$A c = b$$
$$(E26)$$

where

$$A = \begin{bmatrix} a_{11} & a_{12} & a_{13} \\ a_{21} & a_{22} & a_{23} \\ a_{31} & a_{32} & a_{33} \end{bmatrix} \quad , \quad c^T = (c_0, c_1, c_2), \quad b^T = (b_0, b_1, b_2)$$

where $a_{11} = w$, $a_{12} = a_{21} = S_{1k}$, $a_{13} = a_{22} = a_{31} = S_{2k}$, $a_{23} = a_{32} = S_{3k}$, $a_{33} = S_4k$,

$b_1 = S_{\alpha k}$, $b_2 = S_{\alpha 1k}$, $b_3 = S_{\alpha 2k}$

In order to find spline coefficients $c_i$, i = 0, 1, 2 the matrix equation (E26)) should be solved with respect to c, at every step (c = A$^{-1}$ b). To this end matrix A is inverted analytically.

This algorithm has only one parameter to be optimized, this being the size of the moving window w. If the derivative of the measured signal changes slowly it is advisable to have a relatively large window size to filter out measurement noise. If the derivative changes quickly, the window size should be sufficiently small to capture corresponding fast changes in the derivative. The disadvantage of a small window size is the noise in the estimated signal. Ideally, the window size should be adjustable so that it is small enough during transients to capture fast changes in the derivative of the signal, and large enough under steady-state conditions to filter out measurement and space-discretization noise.

For constant discretization step the sums $S_m$ do not change with time, matrix A is constant and computational burden is minimal.

The recursive computations presented above accumulate an approximation error, which increases with time. To avoid this error accumulation problem, repeatable initialization of the algorithms is advantageous.

BRIEF DESCRIPTION OF DRAWINGS

FIG. 1     shows in schematic form an internal combustion engine 1.

Fig. 2     shows a typical appearance of a map determining the window size as a function of engine speed and engine load,

Fig. 3     shows a typical appearance of the dependence between the window size and the time derivative of the throttle angle,

Fig. 4     shows a flow chart for carrying out a method according to the invention,

Fig. 5     shows a diagram of a mowing window,

Fig. 6     show engine speed as a function of step number,

Fig. 7     show engine speed as a function of step number,

Fig. 8     shows crancshaft acceleration corresponding to engine speeds in figure 3, and

Fig. 9     shows an application of a recursive spline method for use in misfire diagnostics.

MODE(S) FOR CARRYING OUT THE INVENTION

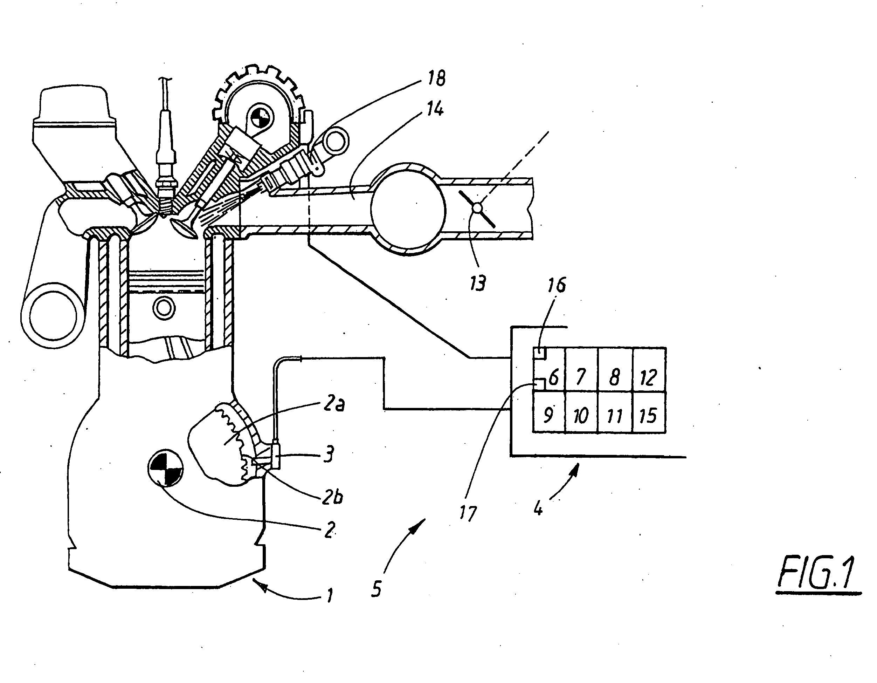

FIG. 1 shows in schematic form an internal combustion engine 1. The invention may be applied on any type of combustion engine for monitoring an engine parameter. The invention is particularly advantageous for monitoring an engine parameter, which is sampled at discrete intervals of a varying length. Examples of engine parameters that are sampled at irregular intervals are crank shaft position and cam shaft position.

The combustion engine 1 is equipped with a crankshaft 2 and a crankshaft position sensor 3. The crankshaft position sensor 3 can be of any type, but preferably of the type which includes a toothed wheel with a missing tooth and a single sensor providing a pulse train signal corresponding to the teeth of the wheel passing nearby, such as for example disclosed in any of US 4797827; US 4982330; US 4553426; US 4825373 and US. 4870587. Which are all incorporated by reference.

An electronic control unit 4 receives a signal from the crankshaft sensor 3 corresponding to the angular position of crankshaft 2. In the present embodiment, this signal consists of a pulse train, with each pulse corresponding to a specific section of an angle swept by crankshaft 2. The pulse train is preferably generated by a teethed wheel 2a arranged on the crankshaft 2. At a designated position of the crankshaft, the teethed wheel 2a is equipped with a mark 2b that generates a special pulse and therefore makes it possible to determine the absolute position of the crankshaft.

The electronic control unit 4 together with said crankshaft sensor 3 constitutes an apparatus 5 for determining the variation of an engine parameter by interpolating a polynomial to a moving window of size w, where w is the number of measurement data being obtained in the window. The crankshaft position sensor 3 constitutes a detector arranged for collecting measurement data at a variable discretisation step.

The apparatus includes means 6 for assigning a polynomial of order n representing the variation of said engine parameter, said polynomial being characterised by a set of model coefficients associated with said window, which model coefficients are represented by a set of sums over measurement data and powers of said discretisation step in said window, means 7 for determining said model coefficients by calculating said sums, and means 8 for moving the window by entering a new measurement data and rejecting a first measurement data in said window.

The means 6 for assigning a polynomial is constituted by a vector stored in a memory. The vector represents a set of model coefficients. The means 8 for moving the window is constituted by a buffer, which is continuously updated by receiving a new value from the crankshaft position sensor and rejecting the oldest value. The means 7 for determining the model coefficients is constituted by a processor performing the calculations solving the equation system (E3). The means 7 for determining said model coefficients are arranged to determine model coefficients for consecutively following windows by recursive use of sums calculated prior to moving said window. This recursive use is performed by using formulas (E14) and (E15). In order to use a recursive method lower order sums must be known. In an initialisation process a first set of sums are calculated directly from information of measurement value $\alpha_i$ and the time $t_i$ for obtaining measurement value $\alpha_i$. The sums necessary to calculate are shown in formulas (E4) - (E6).

In the event a first or a second derivative of the engine parameter is of interest for monitoring or for control purposes of the engine, said apparatus 5 may further include means 9 for determining a time derivative of said engine parameter from a time derivative of said polynomial and means 10 for determining a second time derivative of said engine parameter from a second time derivative of said polynomial. Such means are constituted by vector stored in a memory. The vector represents a set of model coefficients which magnitude is determined by the means 7 for determining the model coefficients.

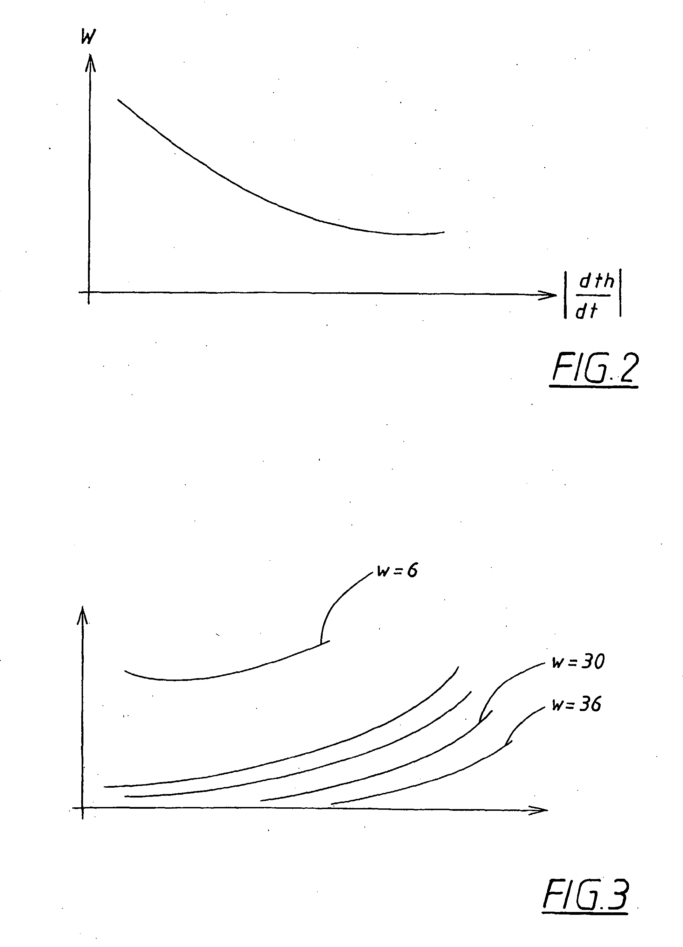

In a preferred embodiment the apparatus 5 further includes means 11 for adjusting the size of the window. The size of the window is adjusted by adjusting the length of the buffer in which the values of the position of the crankshaft are stored. Furthermore the sums are adjusted to the size of the window. Preferably the window size is adjusted such that it decreases with increased magnitude of a time derivative of a throttle angle arranged in an intake conduit of said engine. For that reason the apparatus may include means 12 for determining the time derivative of the angular position of a throttle 13 arranged in an intake conduit 14 of the combustion engine 1. Furthermore the window size may be dependent on engine operating speed and/or engine load. For that reason the apparatus may include a map 15 which determines a window size as a function of engine operating speed and engine load. The value obtained from the map may be corrected by information regarding the magnitude of the time derivative of the throttle angle. Typical appearances of map 15 and the dependence between the window size and the time derivative of the throttle angle are shown in figures 2 and 3. The window size typically decreases with increased load and increased engine speed. Furthermore the window size is decreasing with increased magnitude of the time derivative of the throttle angle.

The means 6 for determining the model coefficients are arranged to perform an initialisation process of the recursive use of sums at discrete intervals, wherein in said initialisation process said sums are calculated directly from measurement data and information about the size of discretisation step without recursive use of previously calculated sums. The initialisation process may be performed at intervals in order to reduce systematic errors in the estimation of the engine parameter. For that reason the means for determining the model coefficients may include an initialisation routine, in which a first set of sums are calculated directly from information of measurement value $\alpha_i$ and the time t, for obtaining measurement value $\alpha_i$.

The sums necessary to calculate are shown in formulas (E4) - (E6).The initialisation process always runs when the means for determining the model coefficients does not have access to previously calculated sums , which are stored in a register 16. The initialisation may also be performed when an initialisation flag 17 is active. The flag may be active after a predetermined number of engine revolutions or when the engine is determined to operate under steady state.

All the different means referred to above included in the electronic control unit 4 are constituted by programs running in a microcontroller having processing means and storage areas. The microcontroller is programmed to execute calculation of the formulas referred to above by use of information provided from the crankshaft sensor 3.

The invention also relates to a combustion engine of the above indicated type comprising a rotatable output shaft and a sensor including:

- disk means coupled to said rotatable output shaft, said disk means being provided thereon with a reference information and a plurality of equi-spaced angular informations; sensor means positioned to face said disk means, said sensor means providing a train of first output signals in timed relation with the passing of said equi-spaced angular informations therethrough. In this event the engine would include an apparatus for determining the variation of the position of said rotatatable output shaft by interpolating a polynomial to data obtained from said equi-spaced angular information according to what is described above.

The equi-spaced angular information are preferably arranged in the form of encoder teeth arranged on a disc. The reference information can be arranged in the form of a gap, where one tooth is left out.

In particular the invention may be preferably used in connection with a regulator unit for a combustion engine wherein the operation of the engine is regulated in accordance with an engine parameter and a derivative thereof, characterised in that said regulator unit includes means for determining said engine parameter by

- (a) assigning a polynomial of order n representing the variation of said engine parameter in a window of size w, where w is the number of measurement data being obtained in the window, said polynomial being characterised by a set of model coefficients associated with said window, and
- (b) determining said model coefficients, and further means for determining a time derivative of said engine parameter from a time derivative of said polynomial.

The regulator may be constituted by the control unit 4 described above and may be used for controlling the throttle valve 13 a fuel injector 18 or any other means arranged in the combustion engine in which a derivative of a signal is used as a control parameter.

In figure 4 a flow chart for a method for determining the variation of an engine parameter by interpolating a polynomial to a moving window of size w is shown. Here w is the number of measurement data being obtained in the window,

In a first method step 110 measurement data is obtained at a variable discretisation step. In a preferred embodiment the engine parameter is constituted by an angle position of a crankshaft and/or a camshaft arranged in the engine.

In a second method step 120 a polynomial of order n representing the variation of said engine parameter is assigned. The polynomial is characterised by a set of model coefficients associated with said window, which model coefficients are represented by a set of sums over measurement data and powers of said discretisation step in said window.

In a third method step 130 the model coefficients are calculated by calculating the sums indicated in equations (E14) and (E15). When determining the model coefficients previously determined sums are recursively used.

In a fourth method step 140 the window is moved by entering a new measurement data and rejecting a first measurement data in said window.

The method steps are continuously repeated while performing the determination of the variation of the studied engine parameter.

In a preferred embodiment a time derivative of said engine parameter is determined from a time derivative of said polynomial. The time derivative can by obtained in a calculation routine 150 running in parallel with the determination of the model coefficients. A second derivative may be obtained in a similar fashion by a second calculation routine 160.

The calculation of the model coefficients are dependent on the window size. In an embodiment of the invention the window size may be determined in a third sub routine 170. The window size may according to what is disclosed above be determined from information regarding the magnitude of the time derivative of the throttle angle and information regarding engine speed and engine load.

An embodiment of the invention relating to crankshaft acceleration estimation using a second order polynomial and test results for such an embodiment will be described below:

A passenger car equipped with a crankshaft angle sensor is used for experiments. The method described above is used is to estimate the crankshaft acceleration, which gives vital information about the quality of the combustion in the engine, from the crankshaft angle measurements.

The car is equipped with a special Engine Control Unit, which is called Volvo Rapid Prototyping System. This system consists of the PM (Power Module) and the AM (Application Module) connected together via a 1 Mbit/s CAN channel.

The PM provides information based on a number of engine sensor signals. The crankshaft wheel has 58 teeth spaced every 6 degrees and a gap corresponding to two " missing teeth ". Engine speed and cylinder position can be calculated from the resulting crankshaft sensor signal. The PM calculates the engine speed based on the measured time between the tooth events via the backwards difference method. This engine speed is sent up along with other measurements at every 4th millisecond to the AM.

The 4 millisecond sampled crankshaft angle calculated from the tooth number signal is the input to the crankshaft acceleration estimation, which runs in the AM. The accuracy of the estimation is verified by comparing the engine speed, calculated by the spline interpolation method, with the engine speed calculated in the PM.

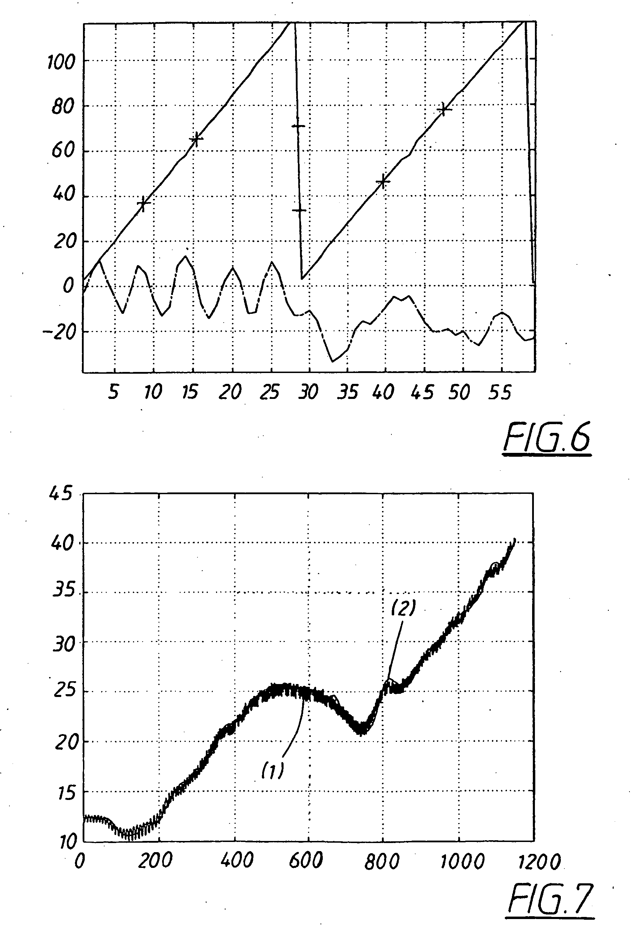

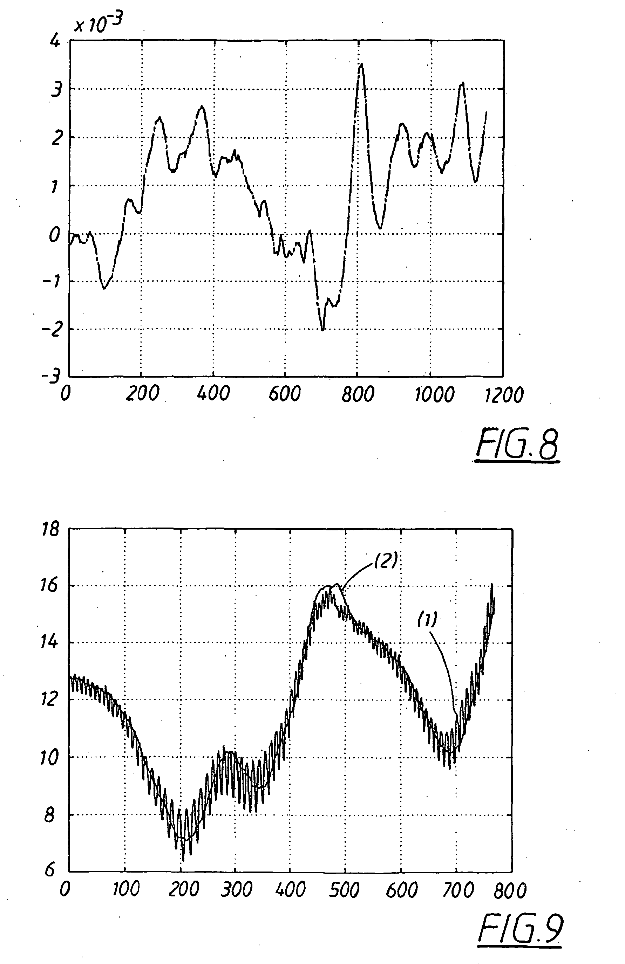

Implementation results are presented in Fig.6-8. Figures 6 and 7 show engine speeds and Figure 8 crankshaft acceleration as a function of a step number. Figures 4 and 5 illustrate verification process for spline interpolation method with the window size w = 60 . The accuracy of the estimation is verified by comparing fast engine speed measured in the PM module ( line marked with reference (1)) and engine speed calculated via spline interpolation method ( line marked with reference (2) ), which is the line having variations with a lower frequency.
Crankshaft acceleration which corresponds to the engine speeds plotted in Figure 7 is presented in Figure 8.

Fig. 6 shows that the spline interpolation method provides smoother engine speed than the speed computed in the PM. However, minor deviations between lines marked with references (1) and (2) are present for the cases when the engine speed changes fast. This problem caused by relatively large window size, can be solved by introduction of the adjustable window size w see explanations above.

Figure 9 shows an application of the proposed recursive spline interpolation method to the misfire diagnostics. In this Figure two engine cycles of a 5 cylinder engine are shown, and the misfire is generated on the second cycle of cylinder N 4. The tooth number signal is plotted with a line marked with + signs. Crankshaft acceleration estimated by the spline interpolation method is plotted with adotted line. In the event of a misfire, the crankshaft acceleration decreases, which permits individual cylinder detection.

It is worth remarking that in production systems the time which is required to rotate 36 degrees on a crankshaft for 5 cylinder engines is available in the Electronic Control Unit. Discretization step w.r.t. crank angle is constant in this case while the time between the samples varies. In this case one could fit the following polynomial in the least squares sense to the measured data:

$$\hat{t} = c_0 + c_1\alpha + c_2\alpha^2,$$

where $\hat{t}$ is the time estimate and $\alpha$ is the crank angle.

This approach has reduced computational burden since the polynomial fitting is done with constant discretization step w.r.t. $\alpha$. Then $\alpha$ is calculated as $\alpha = \dfrac{1}{c_1 + 2c_2\alpha}$ . It has a singular point $c_1 + 2c_2\alpha = 0$ . The estimate of the derivative is not robust if $c_1 + 2c_2\alpha$ is close to zero. Moreover, the estimate of the derivative in this approach depends on the crank angle $\alpha$, while the estimate of the derivative of an interpolated polynomial depends on the time t. The dependence of the derivative estimate on the crank angle makes the approach too sensitive to the missing teeth and, in turn, makes the approach difficult for implementation.

Further development of the crankshaft acceleration estimation method is possible if the time between the tooth events is available in the AM. The required discretization step w.r.t. the crankshaft angle is either 6 degrees or 18 degrees in case of the missing teeth. This application requires higher computational power but, in return, it gives the best estimation of the crankshaft speed and acceleration achievable by the spline interpolation method. The compromise is 36 degrees discretization step for 5 cylinders engine.

The crankshaft acceleration is widely used in many engine control and diagnostic functions such as crankshaft torque estimation, which is based on crankshaft acceleration. Crankshaft acceleration is used also in misfire diagnostics functions, for misfire detection and also in many combustion quality monitoring functions. The estimation accuracy of crankshaft acceleration improved by the spline interpolation method, in turn, improves the performance of these functions as well.

The method can also be used to estimate other signals and their derivatives. It has the greatest potential in diagnostics, when post processing of the signal is allowed and the derivatives of the signal can be taken in the middle of the moving window. That essentially improves the estimation accuracy and hence the performance of the on-board diagnostic functions.

The invention shall not be restricted to the embodiments described above, but can be varied within the scope of the claims. In particular, the invention can be operated diesel engines as well as an otto engine as depicted in figure 1.

**Claims**

**1.** Method for determining the variation of an engine parameter by interpolating a polynomial to a moving window of size w, where w is the number of measurement data being obtained in the window, said measurement data being obtained at a variable discretisation step, **characterised in that** the method includes the following method steps:

    - (a) assigning a polynomial of order n representing the variation of said engine parameter, said polynomial being **characterised by** a set of model coefficients associated with said window, which model coefficients are represented by a set of sums over measurement data and powers of said variable discretisation step in said window,
    - (b) determining said model coefficients by calculating said sums,
    - moving (c) the window by entering a new measurement data and rejecting a first measurement data in said window, and
    - repeating method steps (a) - (c),

wherein said model coefficients after moving said window are determined by recursive use of sums calculated prior to moving said window.

2. Method according to claim 1, **characterised in that** said engine parameter is constituted by an angle position of a crankshaft arranged in the engine.

3. Method according to claim 1, **characterised in that** said engine parameter is constituted by an angle position of a camshaft arranged in the engine.

4. Method according to any of claims 1-3, **characterised in that** a time derivative of said engine parameter is determined from a time derivative of said polynomial.

5. Method according to any of claims 1-4, **characterised in that** a second time derivative of said engine parameter is determined from a second time derivative of said polynomial.

6. Method according to any of the preceding claims, **characterised in that** the size of the window is adjustable.

7. Method according to claim 6, **characterised in that** the window size decreases with increased magnitude of a time derivative of a throttle angle arranged in an intake conduit of said engine.

8. Method according to claim 6 or 7, **characterised in that** said window size is dependent on engine operating speed and/or engine load.

9. Method according to any of the preceding claims **characterised in that** an initialisation process of the recursive use of sums is performed at discrete intervals, wherein in said initialisation process said sums are calculated directly from measurement data and information about the size of discretisation step without recursive use of previously calculated sums.

10. Apparatus for determining the variation of an engine parameter by interpolating a polynomial to a moving window of size w, where w is the number of measurement data being obtained in the window, said apparatus including a detector arranged for collecting measurement data at a variable discretisation step, **characterised in that** said apparatus further includes:

    - means for assigning a polynomial of order n representing the variation of said engine parameter, said polynomial being **characterised by** a set of model coefficients associated with said window, which model coefficients are represented by a set of sums over measurement data and powers of said variable discretisation step in said window,
    - means for determining said model coefficients by calculating said sums, and
    - means for moving the window by entering a new measurement data and rejecting a first measurement data in said window,

wherein said means for determining said model coefficients are arranged to determine model coefficients for consecutively following windows by recursive use of sums calculated prior to moving said window.

11. Apparatus according to claim 10, **characterised in that** said engine parameter is constituted by an angle position of a crankshaft arranged in the engine.

12. Apparatus according to claim 10, **characterised in that** said engine parameter is constituted by an angle position of a camshaft arranged in the engine.

13. Apparatus according to any of claims 10-12, **characterised in that** the apparatus includes means for determining a time derivative of said engine parameter from a time derivative of said polynomial.

14. Apparatus according to any of claims 10-13, **characterised in that** the apparatus includes means for determining a second time derivative of said engine parameter from a second time derivative of said polynomial.

15. Apparatus according to any of claims 10 -14, **characterised** said apparatus includes means for adjusting the size of the window.

16. Apparatus according to claim 15, **characterised in that** the window size decreases with increased magnitude of a time derivative of a throttle angle arranged in an intake conduit of said engine.

17. Apparatus according to claim 15 or 16, **characterised in that** said window size is dependent on engine operating speed and/or engine load.

18. Apparatus according to any of claims 10 - 17, **characterised in that** said means for determining the model coefficients are arranged to perform an initialisation process of the recursive use of sums at discrete intervals, wherein in said initialisation process said sums are calculated directly from measurement data and information about the size of discretisation step without recursive use of previously calculated sums.

19. Combustion engine comprising a rotatable output shaft and a sensor including:

- disk means coupled to said rotatable output shaft, said disk means being provided thereon with a reference information and a plurality of equi-spaced angular informations; sensor means positioned to face said disk means, said sensor means providing a train of first output signals in timed relation with the passing of said equi-spaced angular informations therethrough, **characterised in that** said engine includes apparatus according to any of claims 9 -18, which is arranged for determining the variation of the position of said rotatatable output shaft by interpolating a polynomial to data obtained from said equi-spaced angular information.

**Patentansprüche**

1. Verfahren zum Bestimmen der Änderung eines Motorparameters durch Interpolieren eines Polynoms an ein sich bewegendes Fenster der Größe w, wobei w die Anzahl der Meßdaten ist, die im Fenster erhalten werden, wobei die Meßdaten bei einem variablen Diskretisierungsschritt erhalten werden, **dadurch gekennzeichnet, daß** das Verfahren die folgenden Verfahrensschritte aufweist:

- (a) Zuweisen eines Polynoms der Ordnung n, das die Änderung des Motorparameters repräsentiert, wobei das Polynom durch einen Satz Modellkoeffizienten **gekennzeichnet** ist, die mit dem Fenster in Beziehung stehen, wobei die Modellkoeffizienten durch einen Satz von Summen über Meßdaten und Potenzen des variablen Diskretisierungsschritts in dem Fenster repräsentiert werden,
- (b) Bestimmen der Modellkoeffizienten durch Berechnen der Summen,
- Bewegen (c) des Fensters durch Eingeben neuer Meßdaten und Aussondern erster Meßdaten in dem Fenster, und
- Wiederholen der Verfahrensschritte (a) - (c),

wobei die Modellkoeffizienten nach dem Bewegen des Fensters durch eine rekursive Verwendung der Summen bestimmt werden, die vor dem Bewegen des Fensters berechnet werden.

2. Verfahren nach Anspruch 1, **dadurch gekennzeichnet, daß** der Motorparameter durch eine Winkelposition einer Kurbelwelle gebildet wird, die im Motor angeordnet ist.

3. Verfahren nach Anspruch 1, **dadurch gekennzeichnet, daß** der Motorparameter durch eine Winkelposition einer Nockenwelle gebildet wird, die im Motor angeordnet ist.

**4.** Verfahren nach einem der Ansprüche 1-3, **dadurch gekennzeichnet, daß** eine zeitliche Ableitung des Motorparameters aus einer zeitlichen Ableitung des Polynoms bestimmt wird.

**5.** Verfahren nach einem der Ansprüche 1-4, **dadurch gekennzeichnet, daß** eine zweite zeitliche Ableitung des Motorparameters aus einer zweiten zeitlichen Ableitung des Polynoms bestimmt wird.

**6.** Verfahren nach einem der vorhergehenden Ansprüche, **dadurch gekennzeichnet, daß** die Größe des Fensters einstellbar ist.

**7.** Verfahren nach Anspruch 6, **dadurch gekennzeichnet, daß** die Fenstergröße mit einem zunehmenden Betrag einer zeitlichen Ableitung eines Drosselklappenwinkels abnimmt, der in einem Ansaugkanal des Motors angeordnet ist.

**8.** Verfahren nach Anspruch 6 oder 7, **dadurch gekennzeichnet, daß** die Fenstergröße von der Motorbetriebsdrehzahl und/oder Motorlast abhängig ist.

**9.** Verfahren nach einem der vorhergehenden Ansprüche, **dadurch gekennzeichnet, daß** ein Initialisierungsprozeß der rekursiven Verwendung von Summen in diskreten Intervallen durchgeführt wird, wobei im Initialisierungsprozeß die Summen ohne eine rekursive Verwendung der vorhergehend berechneten Summen direkt aus Meßdaten und Informationen über die Größe eines Diskretisierungsschritts berechnet werden.

**10.** Vorrichtung zur Bestimmung der Änderung eines Motorparameters durch Interpolieren eines Polynoms an ein sich bewegendes Fenster der Größe w, wobei w die Anzahl der Meßdaten ist, die im Fenster erhalten werden, wobei die Vorrichtung einen Detektor aufweist, der zur Sammlung von Meßdaten mit einem variablen Diskretisierungsschritt angeordnet ist, **dadurch gekennzeichnet, daß** die Vorrichtung ferner aufweist:

- Einrichtungen zum Zuweisen eines Polynoms der Ordnung n, das die Änderung des Motorsparameters repräsentiert, wobei das Polynom durch einen Satz Modellkoeffizienten **gekennzeichnet** ist, die mit dem Fenster in Beziehung stehen, wobei die Modellkoeffizienten durch einen Satz von Summen über Meßdaten und Potenzen des variablen Diskretisierungsschritts in dem Fenster repräsentiert werden,
- Einrichtungen zur Bestimmung der Modellkoeffizienten durch Berechnen der Summen, und
- Einrichtungen zur Bewegung des Fensters durch Eingeben neuer Meßdaten und Aussondern erster Meßdaten in dem Fenster, wobei die Einrichtungen zur Bestimmung der Modellkoeffizienten eingerichtet sind, Modellkoeffizienten für hintereinander folgende Fenster durch rekursive Verwendung der Summen zu bestimmen, die vor dem Bewegen des Fensters berechnet werden.

**11.** Vorrichtung nach Anspruch 10, **dadurch gekennzeichnet, daß** der Motorparameter durch eine Winkelposition einer Kurbelwelle gebildet wird, die im Motor angeordnet ist.

**12.** Vorrichtung nach Anspruch 10, daß der Motorparameter durch eine Winkelposition einer Nockenwelle gebildet wird, die im Motor angeordnet ist.

**13.** Vorrichtung nach einem der Ansprüche 10 - 12, **dadurch gekennzeichnet, daß** die Vorrichtung Einrichtungen zur Bestimmung einer zeitlichen Ableitung des Motorsparameters aus einer zeitlichen Ableitung des Polynoms aufweist.

**14.** Vorrichtung nach einem der Ansprüche 10 - 13, **dadurch gekennzeichnet, daß** die Vorrichtung Einrichtungen zur Bestimmung einer zweiten zeitlichen Ableitung des Motorsparameters aus einer zweiten zeitlichen Ableitung des Polynoms aufweist.

**15.** Vorrichtung nach einem der Ansprüche 10 - 14, **dadurch gekennzeichnet, daß** die Vorrichtung Einrichtungen zur Einstellung der Größe des Fensters aufweist.

**16.** Vorrichtung nach Anspruch 15, **dadurch gekennzeichnet, daß** die Fenstergröße mit einem zunehmenden Betrag einer zeitlichen Ableitung eines Drosselklappenwinkels abnimmt, die in einem Ansaugkanal des Motors angeordnet ist.

**17.** Vorrichtung nach Anspruch 15 oder 16, **dadurch gekennzeichnet, daß** die Fenstergröße von der Motorbetriebsdrehzahl und/oder der Motorlast abhängig ist.

**18.** Vorrichtung nach einem der Ansprüche 10 - 17, **dadurch gekennzeichnet, daß** die Einrichtungen zur Bestimmung der Modellkoeffizienten eingerichtet sind, einen Initialisierungsprozeß der rekursiven Verwendung von Summen an diskreten Intervallen durchzuführen, wobei im Initialisierungsprozeß die Summen ohne eine rekursive Verwendung der vorhergehend berechneten Summen direkt aus Meßdaten und Informationen über die Größe eines Diskretisierungsschritts berechnet werden.

**19.** Verbrennungsmotor mit einer drehbaren Ausgangswelle und einem Sensor, der aufweist:

- Scheibeneinrichtungen, die mit der drehbaren Ausgangswelle gekoppelt sind, wobei die Scheibeneinrichtungen daran mit einer Bezugsinformation und mehreren in gleichem Abstand voneinander angeordneten Winkelinformationen versehen sind; Sensoreinrichtungen, die so angeordnet sind, daß sie den Scheibeneinrichtungen gegenüberliegen, wobei die Sensoreinrichtungen einen Zug erster Ausgangssignale in einer zeitlichen Beziehung mit dem Durchgang der in gleichem Abstand voneinander angeordneten Winkelinformationen dort hindurch liefern, **dadurch gekennzeichnet, daß** der Motor eine Vorrichtung nach einem der Ansprüche 9 - 18 aufweist, die zur Bestimmung der Änderung der Position der drehbaren Ausgangswelle durch Interpolieren eines Polynoms an Daten eingerichtet ist, die aus den in gleichem Abstand voneinander angeordneten Winkelinformationen erhalten werden.

## Revendications

**1.** Procédé de détermination de la variation d'un paramètre de moteur par l'interpolation d'un polynôme sur une fenêtre mobile de taille w, où w est le nombre de données de mesure obtenues dans la fenêtre, lesdites données de mesure étant obtenues à un pas de discrétisation de variable, **caractérisé en ce que** le procédé inclut les étapes de procédé suivantes :

- (a) attribution d'un polynôme d'ordre n représentant la variation dudit paramètre de moteur, ledit polynôme étant **caractérisé par** un jeu de coefficients de modèle associés à ladite fenêtre, lesquels coefficients de modèle sont représentés par un jeu de sommes sur des données de mesure et des puissances du dit pas de discrétisation de variable dans ladite fenêtre,
- (b) détermination desdits coefficients de modèle en calculant lesdites sommes,
- déplacement (c) de la fenêtre en entrant une nouvelle donnée de mesure et en rejetant une première donnée de mesure dans ladite fenêtre, et
- en répétant les étapes de procédé (a) à (c),

dans lequel lesdits coefficients de mesure après le déplacement de ladite fenêtre sont déterminés par une utilisation récurrente des sommes calculées avant de déplacer lesdites fenêtres.

**2.** Procédé selon la revendication 1, **caractérisé en ce que** ledit paramètre de moteur est constitué par une position d'angle d'un vilebrequin agencé dans le moteur.

**3.** Procédé selon la revendication 1, **caractérisé en ce que** ledit paramètre de moteur est constitué par une position d'angle d'un arbre à cames agencé dans le moteur.

**4.** Procédé selon l'une quelconque des revendications 1 à 3, **caractérisé en ce qu'**une dérivée temporelle dudit paramètre de moteur est déterminée à partir d'une dérivée temporelle dudit polynôme.

**5.** Procédé selon l'une quelconque des revendications 1 à 4, **caractérisé en ce qu'**une seconde dérivée temporelle dudit paramètre de moteur est déterminée à partir d'une seconde dérivée temporelle dudit polynôme.

**6.** Procédé selon l'une quelconque des revendications précédentes, **caractérisé en ce que** la taille de la fenêtre est réglable.

**7.** Procédé selon la revendication 6, **caractérisé en ce que** la taille de la fenêtre décroît avec l'augmentation de l'amplitude d'une dérivée temporelle d'un angle d'ouverture du papillon agencé dans un conduit d'admission dudit moteur.

**8.** Procédé selon la revendication 6 ou 7, **caractérisé en ce que** ladite taille de fenêtre dépend de la vitesse de fonctionnement du moteur et/ou de la charge du moteur.

9. Procédé selon l'une quelconque des revendications précédentes, **caractérisé en ce qu'**un processus d'initialisation de l'utilisation récurrente de sommes est exécuté à des intervalles discrets, dans lequel pendant ledit processus d'initialisation, lesdites sommes sont calculées directement à partir des données de mesure et des informations concernant la taille du pas de discrétisation, sans utilisation récurrente des sommes précédemment calculées.

10. Appareil de détermination de la variation d'un paramètre de moteur par l'interpolation d'un polynôme sur une fenêtre mobile de taille w, où w est le nombre de données de mesure obtenues dans la fenêtre, ledit appareil incluant un détecteur agencé pour collecter des données de mesure au cours avec un pas de discrétisation de variable, **caractérisé en ce que** ledit appareil inclut en outre :

- des moyens d'attribution d'un polynôme d'ordre n représentant la variation dudit paramètre du moteur, ledit polynôme étant **caractérisé par** un jeu de coefficients de modèle associés à ladite fenêtre, lesquels coefficients de modèle sont représentés par un jeu de sommes sur des données de mesure et des puissances du dit pas de discrétisation de variable dans ladite fenêtre,
- des moyens de détermination desdits coefficients de modèle en calculant lesdites sommes, et
- des moyens de déplacement de la fenêtre en entrant une nouvelle donnée de mesure et en rejetant une première donnée de mesure dans ladite fenêtre, dans lequel lesdits moyens de détermination desdits coefficients de modèle sont agencés pour déterminer les coefficients de modèle afin de suivre consécutivement les fenêtres grâce à une utilisation récurrente des sommes calculées avant de déplacer ladite fenêtre.

11. Appareil selon la revendication 10, **caractérisé en ce que** ledit paramètre de moteur est constitué par une position d'angle d'un vilebrequin agencé dans le moteur.

12. Appareil selon la revendication 10, **caractérisé en ce que** ledit paramètre de moteur est constitué par une position d'angle d'un arbre à cames agencé dans le moteur.

13. Appareil selon l'une quelconque des revendications 10 à 12, **caractérisé en ce que** l'appareil inclut un moyen de détermination d'une dérivée temporelle dudit paramètre de moteur à partir d'une dérivée temporelle dudit polynôme.

14. Appareil selon l'une quelconque des revendications 10 à 13, **caractérisé en ce que** l'appareil inclut un moyen de détermination d'une seconde dérivée temporelle dudit paramètre de moteur à partir d'une seconde dérivée temporelle dudit polynôme.

15. Appareil selon l'une quelconque des revendications 10 à 14, **caractérisé en ce que** ledit appareil inclut des moyens de réglage de la taille de la fenêtre.

16. Appareil selon la revendication 15, **caractérisé en ce que** la taille de la fenêtre décroît avec l'augmentation de l'amplitude d'une dérivée temporelle d'un angle d'ouverture de papillon agencé dans un conduit d'acquisition dudit moteur.

17. Appareil selon la revendication 15 ou 16, **caractérisé en ce que** ladite taille de la fenêtre dépend de la vitesse de fonctionnement du moteur et/ou de la charge du moteur.

18. Appareil selon l'une quelconque des revendications 10 à 17, **caractérisé en ce que** lesdits moyens de détermination des coefficients de modèle sont agencés pour effectuer un processus d'initialisation de l'utilisation récurrente des sommes à des intervalles discrets, dans lequel pendant ledit processus d'initialisation lesdites sommes sont calculées directement à partir de données de mesure et des informations concernant la taille du pas de discrétisation, sans utilisation récurrente des sommes précédemment calculées.

19. Moteur à combustion comprenant un arbre de sortie rotatif et un capteur incluant :

- des moyens formant disque couplés audit arbre de sortie rotatif, lesdits moyens formant disque étant fournis sur celui-ci avec une information de référence et une pluralité d'informations angulaires espacées d'une manière égale ; des moyens formant capteur positionnés pour faire face auxdits moyens formant disque, lesdits moyens formant capteur fournissant un train de premiers signaux de sortie en une relation minutée avec le passage des dites informations angulaires espacées d'une manière égale à travers ceux-ci, **caractérisé en ce que** ledit moteur inclut un appareil selon l'une quelconque des revendications 9 à 18, qui est agencé pour déterminer la variation de la position dudit arbre de sortie rotatif par l'interpolation d'un polynôme sur des données obtenues à partir des informations angulaires espacées d'une manière égale.

EP 1 462 638 B1

FIG.1

$$\left|\frac{dth}{dt}\right|$$

*FIG.2*

$w = 6$

$w = 30$

$w = 36$

*FIG.3*

*FIG.4*

*FIG.5*

_FIG.6_

_FIG.7_

FIG.8

FIG.9

EP 1 462 638 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4532592 A
- US 5771482 A
- US 6223120 B
- US 5804711 A
- GB 2260194 A

- US 4797827 A
- US 4982330 A
- US 4553426 A
- US 4825373 A
- US 4870587 A

**Non-patent literature cited in the description**

- **DIOP S. ; GRIZZLE J. ; MORAAL P. ; STEFANO-POULOU A.** Interpolation and Numerical Differentiation for Observer Design. *Proc. American Control Conference,* June 1994, 1329-1333
- **FUCH et al.** Fast Least-Squares Polynomial approximation in moving time windows. *Proc. IEEE Int. Conf. on Acoustics, Speech and Signal Processing,* 1999, 1965-1968

- **DABROOM A. ; KHALIL H.** Discrete-Time Implementation of High-Gain Observers for Numerical Differentiation. *International Journal of Control,* 1999, vol. 72 (N17), 1523-1527
- **DIOP S. ; GRIZZLE J. ; MORAAL P. ; STEFANO-POULOU A.** Interpolation and Numerical Differentiation for Observer Design. *Proc. American Control Conference,* June 1994, 1329-1333